# EUROPEAN PATENT APPLICATION

(11) **EP 3 358 340 A1**
(43) Date of publication of application: **08.08.2018**
(21) Application number: 16851906.4
(22) Date of filing: 30.09.2016
(51) Int. Cl.: G01N 23/04, G01N 23/18, G01N 27/72

(54) **FOREIGN-MATTER INSPECTION DEVICE**

(30) Priority: 01.10.2015 JP 2015195902
(71) Applicant: Ishida Co., Ltd., Kyoto-shi, Kyoto 606-8392 (JP); Nissin Electronics Co., Ltd., Tokyo 136-0071 (JP)
(72) Inventor: YAEGASHI Takuya, Hakodate-shi Hokkaido 041-0834 (JP); TANAKA Takayuki, Hachioji-shi Tokyo 193-0812 (JP)
(74) Representative: Global IP Europe Patentanwaltskanzlei
(86) International application number: PCT/JP2016/079137
(87) International publication number: WO 2017/057737

(57) **Abstract**

A foreign-matter inspection device includes a transporting unit transporting an object to be inspected, an X-ray inspection unit detecting a foreign matter included in the object transported by the transporting unit by using permeability of X-rays, a metal detection unit detecting a foreign matter included in the object transported by the transporting unit by using an interaction between a magnetic field and a metal, and a housing accommodating the X-ray inspection unit, the metal detection unit, and at least a part of the transporting unit therein and keeping the X-rays of the X-ray inspection unit from leaking outside. The housing is provided with a door part opening and closing the housing. The door part abuts against the housing via an insulating body in a closed state.

## Description

### Technical Field

The present disclosure relates to a foreign-matter inspection device.

### Background Art

Patent Literature 1 discloses a foreign-matter inspection device capable of performing both X-ray inspection for detecting a foreign matter included in an object to be inspected by using the permeability of X-rays and metal detection for detecting a foreign matter included in the object by using an interaction between a magnetic field and a metal.

### Citation List

### Patent Literature

Patent Literature 1: Japanese Unexamined Patent Publication No. 2015-28465

### Summary of Invention

### Technical Problem

In the foreign-matter inspection device described above, an X-ray inspection unit performing the X-ray inspection is accommodated in a housing and keeps the X-rays from leaking outside and a metal detection unit performing the metal detection is accommodated in the same housing. In this configuration, the housing is provided with a door part in some cases so that, for example, attachment of the metal detection unit to the inside of the housing is performed.

Once the door part rattles (vibrates) with respect to the housing for some reason in this case, an electromotive force attributable to the rattling is generated from the effect of the magnetic field that is generated in the metal detection unit, and then a current may flow through the housing and the door part. This current flow becomes a factor disturbing the metal detection by the metal detection unit.

An object of the present disclosure is to suppress a decline in the detection accuracy of a metal detection unit in a foreign-matter inspection device in which an X-ray inspection unit and the metal detection unit are accommodated in a housing.

### Solution to Problem

A foreign-matter inspection device according to one form of the present disclosure includes a transporting unit configured to transport an object to be inspected; an X-ray inspection unit configured to detect, by using permeability of X-rays, a foreign matter included in the object being transported by the transporting unit; a metal detection unit configured to detect, by using an interaction between a magnetic field and a metal, a foreign matter included in the object being transported by the transporting unit; and a housing accommodating the X-ray inspection unit, the metal detection unit, and at least a part of the transporting unit therein and configured to keep the X-rays of the X-ray inspection unit from leaking outside; wherein the housing is provided with a door part configured to open and close the housing; and the door part is configured to abut against the housing via an insulating body in a closed state.

In the foreign-matter inspection device, the door part of the housing in which the X-ray inspection unit and the metal detection unit are accommodated abuts against the housing via the insulating body in the closed state. As a result, even when the door part rattles, a current flow attributable to the rattling (that is, a factor disturbing the metal detection by the metal detection unit) can be suppressed by the insulating body. Accordingly, in the foreign-matter inspection device in which the X-ray inspection unit and the metal detection unit are accommodated in the housing, a decline in the detection accuracy of the metal detection unit can be suppressed.

In the foreign-matter inspection device according to the form of the present disclosure, the insulating body may be formed of resin. According to this configuration, the part where the door part and the housing abut against each other is formed of resin, and thus the rattling itself of the door part can be suppressed. In addition, the part where the door part and the housing abut against each other is insulated, and thus a negative effect of the part on the magnetic field of the metal detection unit can be prevented.

In the foreign-matter inspection device according to the form of the present disclosure, the insulating body may be disposed in an outer edge portion of the door part to extend along the outer edge portion. According to this configuration, a current flowing due to the rattling can be effectively suppressed.

In the foreign-matter inspection device according to the form of the present disclosure, the door part may have a plate member formed of a metal and the plate member may be disposed to extend along the insulating body and sandwich the insulating body in cooperation with the door part. In this case, external X-ray leakage can be further suppressed by the plate member.

### Advantageous Effects of Invention

According to the present disclosure, a decline in the detection accuracy of the metal detection unit can be suppressed in the foreign-matter inspection device in which the X-ray inspection unit and the metal detection unit are accommodated in the housing.

### Brief Description of Drawings

FIG. 1 is a front view of a foreign-matter inspection device according to an embodiment.
FIG. 2 is a conceptual diagram illustrating a control system and the internal configuration of the foreign-matter inspection device illustrated in FIG. 1.
FIG. 3 is an explanatory diagram of the main configurations of an X-ray inspection unit and a metal detection unit illustrated in FIG. 2.
FIG. 4 is a perspective view of the main configurations of the X-ray inspection unit and the metal detection unit illustrated in FIG. 2.
FIG. 5 is a front view illustrating an open state of a lower door in the foreign-matter inspection device illustrated in FIG. 1.
FIG. 6(a) is a perspective view of the lower door illustrated in FIG. 5. FIG. 6(b) is a cross-sectional view taken along line A-A of FIG. 6(a).
FIG. 7 is a partially enlarged perspective view of the lower door illustrated in FIG. 5.

### Description of Embodiments

Hereinafter, an embodiment will be described in detail with reference to accompanying drawings. In each of the drawings, the same reference numerals will be used to refer to the same or equivalent parts so that duplicate description is omitted.

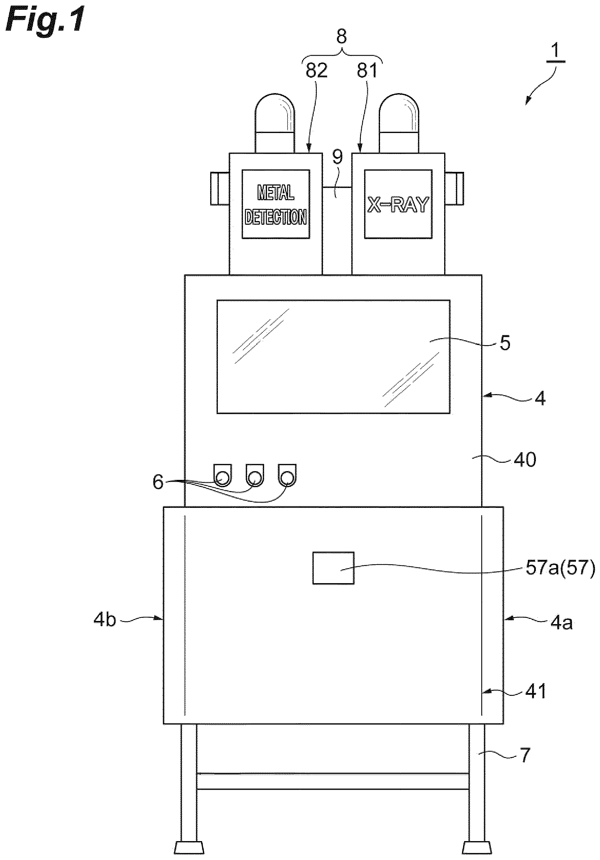

FIG. 1 is a front view of a foreign-matter inspection device 1 according to the embodiment. The foreign-matter inspection device 1 illustrated in FIG. 1 is a device detecting a foreign matter included in an object to be inspected. The object is, for example, food. The foreign-matter inspection device 1 inspects whether or not the foreign matter is included in the object by performing X-ray inspection and metal detection while transporting the object therein.

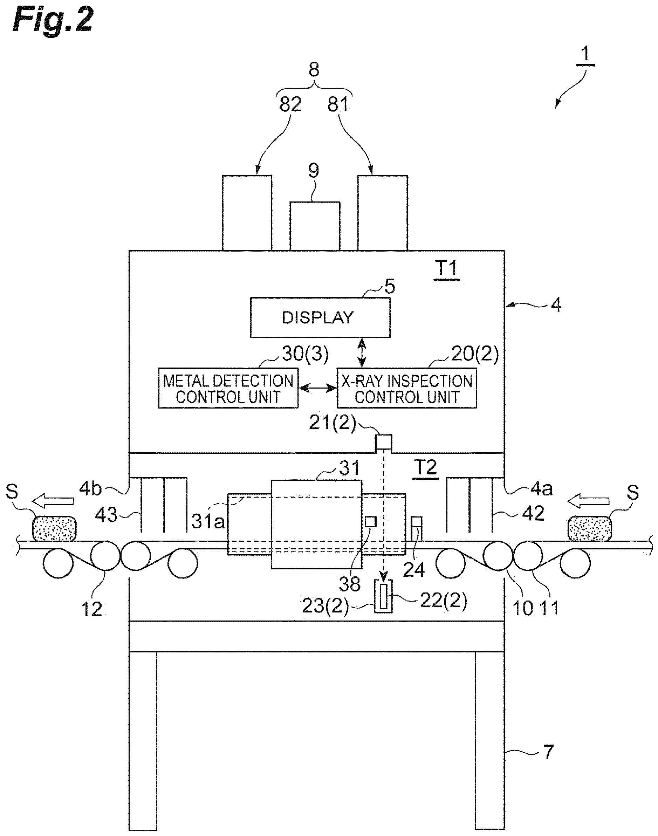

The X-ray inspection is a method for detecting the foreign matter included in the object by using the permeability of X-rays and is realized by an X-ray inspection unit 2 (refer to FIG. 2). During the X-ray inspection, the foreign matter different in X-ray permeability from the object can be detected. The metal detection is a method for detecting the foreign matter included in the object by using an interaction between a magnetic field and a metal and is realized by a metal detection unit 3 (refer to FIG. 2). During the metal detection, a metallic foreign matter can be detected. The X-ray inspection unit 2 and the metal detection unit 3 will be described in detail later.

The foreign-matter inspection device 1 has a housing 4 in which a space is defined. The X-ray inspection unit 2 and the metal detection unit 3 are accommodated in the housing 4. The housing 4 shields the X-rays that are generated by the X-ray inspection unit 2 and keeps the X-rays from leaking outside. The housing 4 is formed of, for example, stainless steel.

In the present embodiment, the housing 4 has a box shape. An opening portion 4a communicating with the inside of the housing 4 is formed in the left side surface of the housing 4. Likewise, an opening portion 4b communicating with the inside of the housing 4 is formed in the right side surface of the housing 4. In the present embodiment, the inspection is performed after the object is carried into the housing 4 from the opening portion 4a, and then the object is carried to the outside of the housing 4 from the opening portion 4b. In other words, the opening portion 4a is an inlet for the object and the opening portion 4b is an outlet for the object.

An upper door 40 and a lower door (door part) 41 opening and closing the housing 4 are disposed on the front surface of the housing 4. The upper door 40 and the lower door 41 are, for example, open door structures. At least a part of the X-ray inspection unit 2 and the metal detection unit 3 (described later) is exposed to the outside by the upper door 40 or the lower door 41 being opened and closed. The upper door 40 and the lower door 41 are formed of, for example, stainless steel.

A display 5 and operation switches 6 are disposed on the front surface of the upper door 40. The display 5 is a display device that has both a display function and an input function and is, for example, a touch panel. The display 5 displays the results of the X-ray inspection and the metal detection and so on and displays an operation screen for setting of various parameters relating to the metal detection and the X-ray inspection. The operation switches 6 are, for example, power switches for the X-ray inspection unit 2 and the metal detection unit 3.

The housing 4 is supported by a support base 7. A notification unit 8 and a cooler 9 are disposed on the upper surface of the housing 4. The notification unit 8 provides notifications on foreign matter contamination and the operation state of equipment. The notification unit 8 is provided with a first alarm 81 corresponding to the X-ray inspection unit 2 and a second alarm 82 corresponding to the metal detection unit 3. The cooler 9 adjusts the temperature of the equipment disposed in the housing 4 by sending cold air into the housing 4.

FIG. 2 is a conceptual diagram illustrating a control system and the internal configuration of the foreign-matter inspection device 1 illustrated in FIG. 1. As illustrated in FIG. 2, the inside of the housing 4 is partitioned into a substrate chamber T1 where a part of an X-ray generator (described later), a component control substrate, and so on are disposed and an inspection chamber T2 where the inspection is performed after an object to be inspected S is carried thereinto. The temperature of the substrate chamber T1 is adjusted by the cooler 9 described above.

A conveyor (transporting unit) 10 transporting the object S is disposed in the inspection chamber T2. In the present embodiment, the conveyor 10 is a roller-type belt conveyor and extends in a horizontal direction inside the housing 4 in a state where one end portion is positioned in the opening portion 4a and the other end portion is positioned in the opening portion 4b. In other words, the part of the conveyor 10 except for the end portions is accommodated in the housing 4. The conveyor 10 according to the present embodiment carries the object S into the housing 4 via the opening portion 4a and carries the object S to the outside of the housing 4 via the opening portion 4b.

An X-ray shielding curtain 42 is disposed in the opening portion 4a. Likewise, an X-ray shielding curtain 43 is disposed in the opening portion 4b. The upper ends of the X-ray shielding curtains 42 and 43 are fixed ends with respect to the housing 4 and the lower ends of the X-ray shielding curtains 42 and 43 are free ends. The X-ray shielding curtains 42 and 43 shield the X-rays that are generated by the X-ray inspection unit 2 and keep the X-rays from leaking outside. The X-ray shielding curtains 42 and 43 are formed of, for example, a flexible material containing tungsten. A carry-in conveyor 11 may be disposed on the right side of the conveyor 10 and a carry-out conveyor 12 may be disposed on the left side of the conveyor 10 so that the object S is automatically carried in and out. In addition, the carry-out conveyor 12 may be provided with a distribution function for the object S.

A case 31 that has an annular body is disposed in the inspection chamber T2, and a through hole 31a is formed in the case 31 so that the object S passes therethrough. The conveyor 10 penetrates the case 31 via the through hole 31a. The object S is allowed to pass through the through hole 31a of the case 31 by the conveyor 10 and the X-ray inspection and the metal detection are sequentially executed in the case 31. The case 31 is formed of, for example, stainless steel.

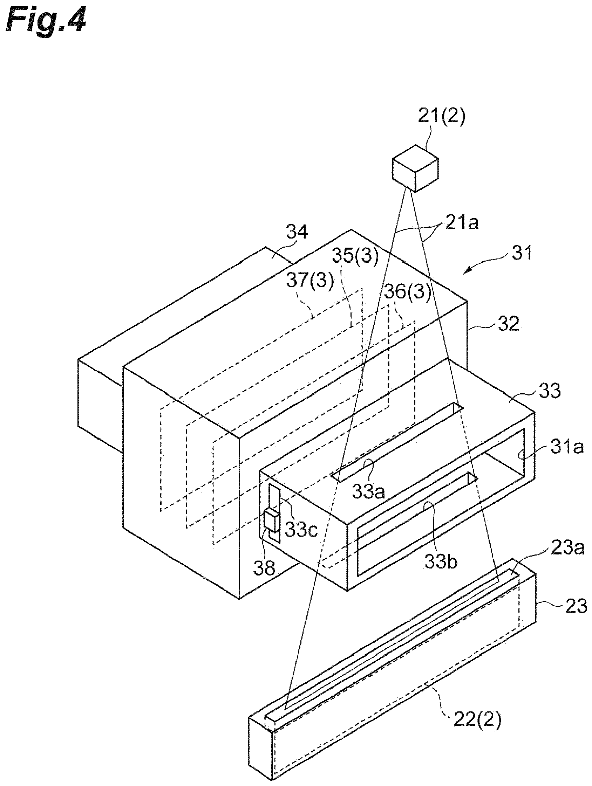

The X-ray inspection unit 2 performing the X-ray inspection will be described first. The X-ray inspection unit 2 is provided with an X-ray inspection control unit 20, an X-ray generator 21, and an X-ray detector 22. The X-ray generator 21 includes an X-ray source generating X-rays and a slit mechanism. The X-ray detector 22 detects the X-rays generated by the X-ray generator 21. The X-ray generator 21 and the X-ray detector 22 are disposed to face each other to sandwich the conveyor 10 and the case 31 from an up-down direction. The X-ray source and so on of the X-ray generator 21 are disposed in the substrate chamber T1 and an X-ray emission mechanism of the X-ray generator 21 is disposed in the inspection chamber T2. A line sensor in which a plurality of X-ray detection sensors is arranged side by side along a front-rear direction is used as an example of the X-ray detector 22. The X-ray detector 22 is accommodated in a substrate case 23 so that X-ray leakage is reduced. A slit 23a (refer to FIG. 4) is formed in the substrate case 23 so that X-rays reach the X-ray detector 22.

The X-ray inspection control unit 20 has an input-output interface I/O performing signal input and output with respect to the outside and so on, a read only memory (ROM) storing, for example, a program and information for performing processing, a random access memory (RAM) temporarily storing data, a storage medium such as a hard disk drive (HDD), a central processing unit (CPU), a communication circuit, and so on. The X-ray inspection control unit 20 realizes the following function by storing input data in the RAM based on a signal output by the CPU, loading the program stored in the ROM into the RAM, and executing the program loaded into the RAM.

The X-ray inspection control unit 20 is disposed in the substrate chamber T1 and connected to the X-ray generator 21 and the X-ray detector 22. The X-ray inspection control unit 20 is connected to the display 5 and receives operation information from an operator via the operation screen. The X-ray inspection control unit 20 sets the operation profiles of the X-ray generator 21 and the X-ray detector 22 based on the operation information and controls the operations of the X-ray generator 21 and the X-ray detector 22. The X-ray inspection control unit 20 initiates the inspection of the object S in a case where the object S is detected by a laser sensor 24 disposed upstream of the X-ray generator 21 and the X-ray detector 22 being used. The X-ray inspection control unit 20 irradiates the object S transported by the conveyor 10 with X-rays by controlling the X-ray generator 21. The X-ray detector 22 measures the X-ray permeation amount of the X-rays permeating the object S and outputs the measured X-ray permeation amount to the X-ray inspection control unit 20.

The X-ray inspection control unit 20 generates an X-ray permeation image in which the X-ray permeation amount acquired in chronological order is reflected in a pixel value. Then, the X-ray inspection control unit 20 detects the foreign matter by analyzing the X-ray permeation image with image processing technology. For example, the X-ray inspection control unit 20 determines, based on the pixel value of the X-ray permeation image, whether or not an image region is present where the difference of the object S from a reference permeation rate is equal to or greater than a predetermined value. The X-ray inspection control unit 20 determines that the foreign matter has been detected in a case where the image region is present where the difference of the object S from the reference permeation rate is equal to or greater than the predetermined value.

The X-ray inspection control unit 20 displays X-ray inspection result data on the display 5 or stores the result data in a storage unit in response to a request from the operator. In addition, the X-ray inspection control unit 20 provides the operator with a notification to the effect that the equipment relating to the X-ray inspection is in operation by using the first alarm 81 in a case where the X-ray generator 21 and the X-ray detector 22 are normally operated. Furthermore, the X-ray inspection control unit 20 provides the operator with a notification to the effect that the foreign matter has been detected by using the first alarm 81 in a case where the X-ray inspection control unit 20 determines that the foreign matter has been detected.

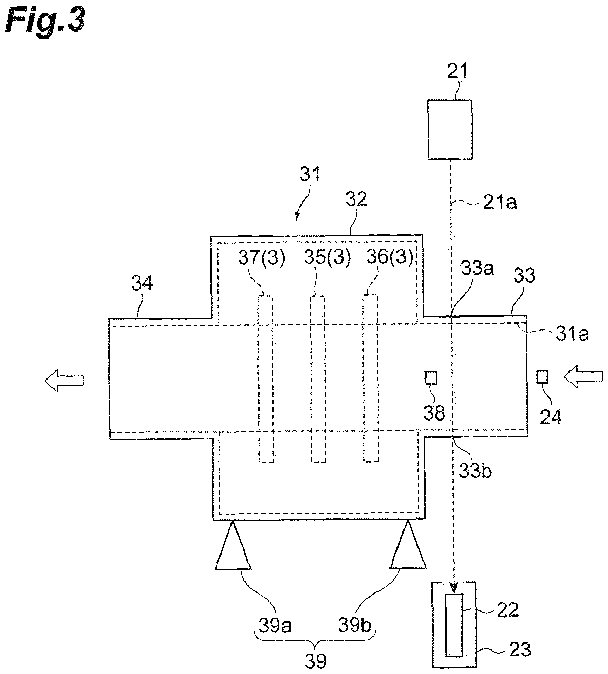

FIG. 3 is an explanatory diagram of the main configurations of the X-ray inspection unit 2 and the metal detection unit 3 illustrated in FIG. 2. FIG. 4 is a perspective view of the main configurations of the X-ray inspection unit 2 and the metal detection unit 3 illustrated in FIG. 2. As illustrated in FIGS. 3 and 4, the case 31 has a main body portion 32, a first hood portion 33, and a second hood portion 34. The first hood portion 33 is disposed on the opening portion 4a side (inlet side) with respect to the main body portion 32. The second hood portion 34 is disposed on the opening portion 4b side (outlet side) with respect to the main body portion 32. The through hole 31a of the case 31 described above is defined by the inner wall of each of the main body portion 32, the first hood portion 33, and the second hood portion 34.

On the upper surface of the first hood portion 33, an X-ray passing slit 33a allowing X-rays to pass is formed to be positioned below the X-ray generator 21. Beneath the lower surface of the first hood portion 33, an X-ray passing slit 33b allowing X-rays to pass is formed to face the X-ray passing slit 33a. The X-ray detector 22 is disposed below the X-ray passing slit 33b. As a result of this configuration, an X-ray 21a generated by the X-ray generator 21 passes through the X-ray passing slits 33a and 33b and is emitted to the object S transported in the case 31. In a side surface of the first hood portion 33, a slit 33c is formed downstream of the X-ray passing slits 33a and 33b (on the main body portion 32 side). A laser sensor 38 (described later) is disposed in the slit 33c. The laser sensor 38 irradiates the object S on the conveyor 10 with laser via the slit 33c.

The metal detection unit 3 performing the metal detection will be described below. The metal detection unit 3 is provided with a metal detection control unit 30, an annular transmission coil 35 as a search coil, and annular receiving coils 36 and 37 as search coils. The transmission coil 35 and the receiving coils 36 and 37 are formed of a conductive material such as a metal and disposed inside the main body portion 32 of the case 31. The transmission coil 35 and the receiving coils 36 and 37 are disposed coaxially with the extension direction of the through hole 31a. In other words, the transmission coil 35 and the receiving coils 36 and 37 are disposed to surround the through hole 31a. As a result, the object S is allowed to pass through the transmission coil 35 and the receiving coils 36 and 37 by the conveyor 10.

The transmission coil 35 is disposed between the receiving coils 36 and 37. The receiving coils 36 and 37 are differentially connected to each other and are disposed symmetrically to the transmission coil 35. The two receiving coils 36 and 37 have the same flux linkage. The transmission coil 35 is configured to be energizable and generates a magnetic flux. Each of the receiving coils 36 and 37 is excited with a voltage by the electromagnetic induction of the magnetic field that is generated by the transmission coil 35. The first hood portion 33 and the second hood portion 34 keep the magnetic field generated by the transmission coil 35 from leaking outside and an external magnetic field from entering.

The metal detection control unit 30 has an input-output interface I/O performing signal input and output with respect to the outside and so on, a ROM storing, for example, a program and information for performing processing, a RAM temporarily storing data, a storage medium such as a HDD, a CPU, a communication circuit, and so on. The metal detection control unit 30 realizes the following function by storing input data in the RAM based on a signal output by the CPU, loading the program stored in the ROM into the RAM, and executing the program loaded into the RAM.

The metal detection control unit 30 is disposed in the substrate chamber T1, is connected to the X-ray inspection control unit 20, and receives the operation information from the operator input to the operation screen of the display 5 via the X-ray inspection control unit 20. The metal detection control unit 30 sets the operation profiles of the transmission coil 35 and the receiving coils 36 and 37 based on the operation information. The metal detection control unit 30 initiates the metal detection for the object S in a case where the object S is detected by the laser sensor 38 disposed upstream of the transmission coil 35 and the receiving coils 36 and 37 being used.

The metal detection control unit 30 generates the magnetic flux by supplying an alternating excitation current to the transmission coil 35. The magnetic flux generated by the transmission coil 35 penetrates the two receiving coils 36 and 37 and each of the receiving coils 36 and 37 is excited with a voltage by the electromagnetic induction. The metal detection control unit 30 acquires the output voltage of the differential connection of the receiving coils 36 and 37 and performs metal detection determination. When the output voltage of the differential connection is 0, the metal detection control unit 30 determines that the metallic foreign matter is yet to be detected. When the output voltage of the differential connection is not 0, the metal detection control unit 30 determines that the metallic foreign matter has been detected.

The metal detection control unit 30 displays metal detection result data on the display 5 or stores the result data in a storage unit in response to a request from the operator. In addition, the metal detection control unit 30 provides the operator with a notification to the effect that the equipment relating to the metal detection is in operation by using the second alarm 82 in a case where the transmission coil 35 and the receiving coils 36 and 37 are normally operated. Furthermore, the metal detection control unit 30 provides the operator with a notification to the effect that the foreign matter has been detected by using the second alarm 82 in a case where the metal detection control unit 30 determines that the foreign matter has been detected. The case 31 may also be held by a vibration isolator 39 (vibration isolators 39a and 39b) for the purpose of improving vibration resistance characteristics.

The X-ray inspection unit 2 and the metal detection unit 3 described above are configured to be operable independently of each other. In other words, the foreign-matter inspection device 1 is capable of not only performing both the X-ray inspection and the metal detection but also executing either the X-ray inspection or the metal detection. In the present embodiment, the X-ray inspection unit 2 performs the display control for the display 5 as described above, and thus the operation screen of the metal detection unit 3 is not displayed on the display 5 in a case where the X-ray inspection unit 2 is stopped. Accordingly, a sub display (not illustrated) connected to the metal detection unit 3 is disposed inside the housing 4. In a case where the X-ray inspection unit 2 is stopped, the metal detection unit 3 receives the operation information via the sub display and displays the result data and the like on the sub display.

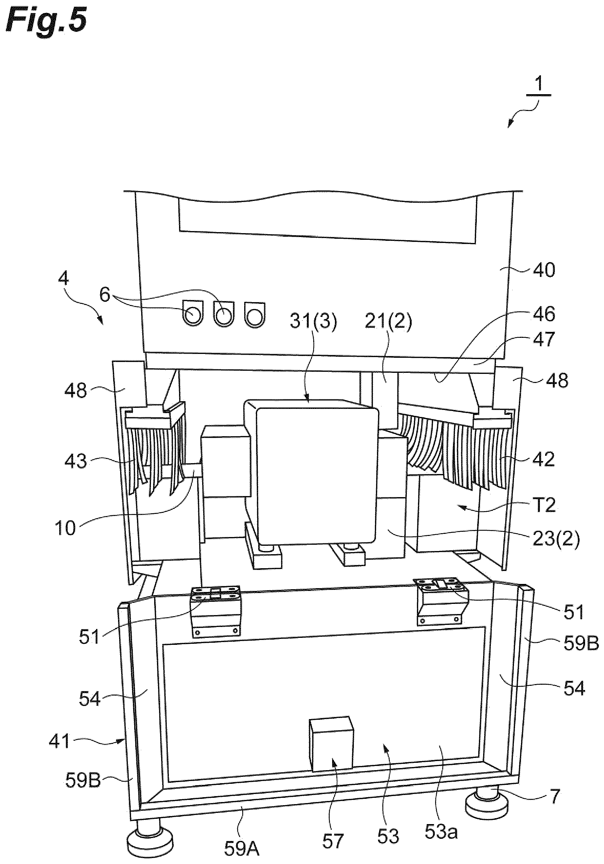

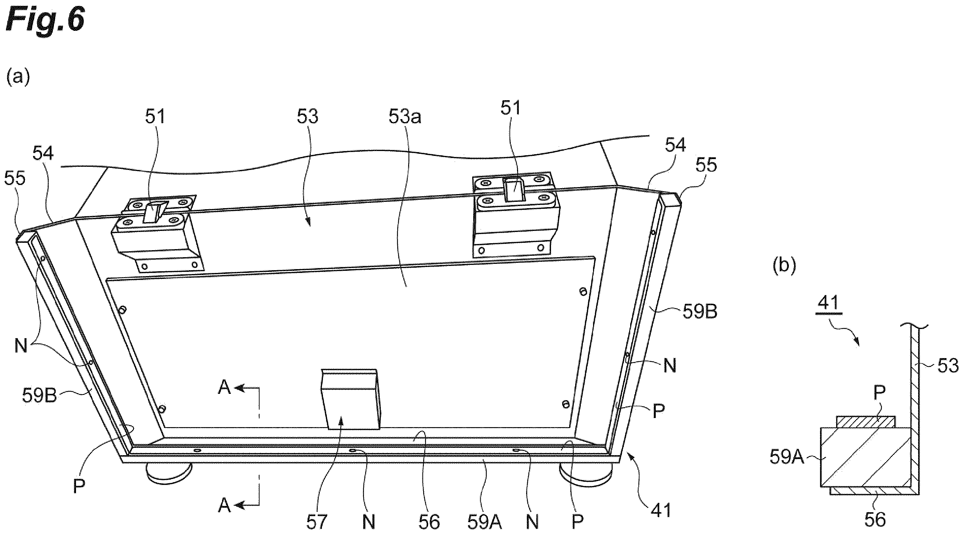

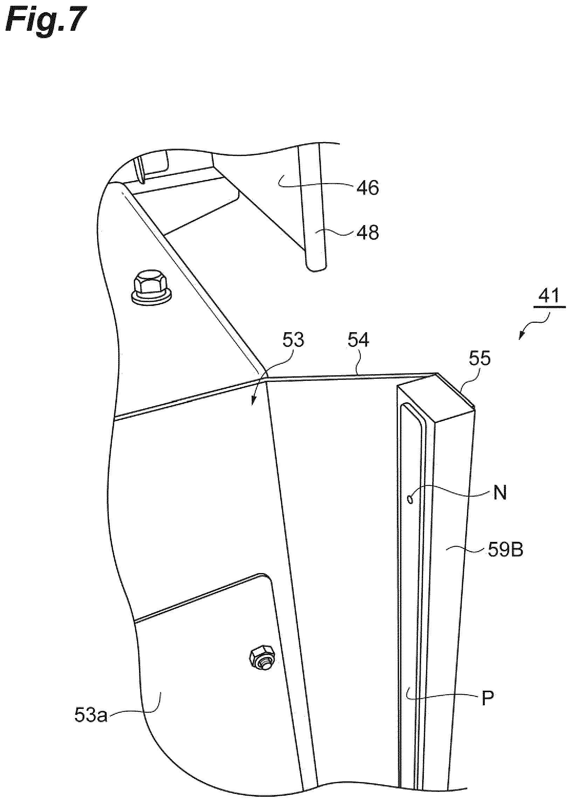

FIG. 5 is a front view illustrating a time when the lower door 41 is in an open state in the foreign-matter inspection device that is illustrated in FIG. 1. FIG. 6(a) is a perspective view of the lower door 41 illustrated in FIG. 5, and FIG. 6(b) is a cross-sectional view taken along line A-A of FIG. 6(a). FIG. 7 is a partially enlarged perspective view of the lower door 41 illustrated in FIG. 5. In the following description, a state where the lower door 41 is closed will be referred to as a "closed state" and a state where the lower door 41 is open will be referred to as an "open state". The "inside" and the "outside" of the lower door 41 mean the inside and the outside in the closed state.

As illustrated in FIG. 5, an opening portion 46 open to the front surface side is formed in the housing 4 and the opening portion 46 exposes the inspection chamber T2. A pair of hinges 51 disposed apart from each other is disposed on the front side of the bottom surface of the inspection chamber T2 (in the lower marginal portion of the opening portion 46). The lower door 41 is attached to the housing 4 such that the opening portion 46 is blocked via the pair of hinges 51. As a result, the lower door 41 is configured to be pivotable around an axis along a left-right direction about the hinges 51 on the lower side thereof. In other words, the lower door 41 that has an open door structure and opens and closes the housing 4 is disposed on the housing 4.

A flange portion 47 extending along the upper marginal portion of the opening portion 46 is disposed in the upper marginal portion of the opening portion 46. Flange portions 48 extending along side edge portions on both sides of the opening portion 46 are disposed in the side edge portions on both sides of the opening portion 46. The flange portions 47 and 48 are abutting surfaces abutting against insulating bodies 59A and 59B (described later) in the closed state.

As illustrated in FIGS. 6 and 7, the lower door 41 is formed of a metal such as stainless steel. The lower door 41 has a rectangular plate-shaped front wall 53, side edge walls 55 respectively and continuously connected to both side edges of the front wall 53 via inclined portions 54, and an upper edge wall 56 continuously connected to the upper edge of the front wall 53 in the closed state.

The front wall 53 has a double plate structure in which a plate member 53a is stacked on the inner surface thereof. As a result, the front wall 53 has a significant external X-ray leakage suppression effect. The hinges 51 are fixed to the front wall 53. In addition, the front wall 53 is provided with an opening and closing control mechanism 57 including a door handle 57a (refer to FIG. 1) for allowing the operator to perform an opening and closing operation on the lower door 41. The side edge walls 55 extend along the side edges of the front wall and have a plate shape perpendicular to the front wall 53. The inclined portions 54 have a plate shape and are inclined inward as the inclined portions 54 become closer to the edges. The upper edge wall 56 extends along the upper edge of the front wall 53 in the closed state and has a plate shape perpendicular to the front wall 53.

In the present embodiment, the insulating body 59A is disposed on the inner surface of the upper edge wall 56. The insulating body 59A extends along the upper edge wall 56. The insulating body 59B similar to the insulating body 59A is disposed on the inner surface of the side edge wall 55. The insulating body 59B extends along the side edge wall 55. The insulating body 59A is disposed continuous to the insulating bodies 59B in both end portions thereof. As a result, the insulating bodies 59A and 59B are disposed in outer edge portions of the lower door 41 to extend along the outer edge portions.

The insulating bodies 59A and 59B have a rectangular sectional shape. Here, the insulating bodies 59A and 59B are colored white. The insulating bodies 59A and 59B protrude inward beyond the upper edge wall 56 and the side edge walls 55 and abut against the flange portions 47 and 48 in the margin of the opening portion 46 in the closed state. In other words, in the closed state, the lower door 41 abuts against the housing 4 via the insulating bodies 59A and 59B.

The insulating bodies 59A and 59B are formed of resin. For example, the insulating bodies 59A and 59B are formed of vinyl chloride resin or polyethylene. The insulating bodies 59A and 59B have at least a certain level of hardness from the viewpoint of, for example, ensuring high durability and are formed of a material other than elastic rubber (high-elastic limit and low-elastic modulus material having an organic polymer represented by natural rubber and synthetic rubber as a main component thereof).

Plate members P extending along the insulating bodies 59A and 59B are disposed on the inner surfaces of the insulating bodies 59A and 59B. The plate members P are formed of a metal such as stainless steel. The plate members P are stacked on and abut against the inner surfaces of the insulating bodies 59A and 59B. In this abutting state, the insulating bodies 59A and 59B and the plate members P are fixed to the lower door 41 by screws N. As a result, the plate members P sandwich the insulating bodies 59A and 59B in cooperation with the lower door 41. In other words, the insulating bodies 59A and 59B are clamped by the lower door 41 and the plate members P.

In the foreign-matter inspection device 1 described above, the lower door 41 of the housing 4 in which the X-ray inspection unit 2 and the metal detection unit 3 are accommodated abuts against the housing 4 via the insulating bodies 59A and 59B in the closed state. As a result, even when the lower door 41 rattles, a current flow attributable to the rattling (that is, a factor disturbing the metal detection by the metal detection unit 3) can be suppressed by the insulating bodies 59A and 59B. Accordingly, in the hybrid-type foreign-matter inspection device 1 in which the X-ray inspection unit 2 and the metal detection unit 3 are accommodated in the housing 4, a decline in the detection accuracy of the metal detection unit 3 can be suppressed.

In the foreign-matter inspection device 1, the insulating bodies 59A and 59B are formed of resin. As a result, the part where the lower door 41 and the housing 4 abut against each other is formed of resin, and thus the rattling itself of the lower door 41 can be suppressed. In addition, the part where the lower door 41 and the housing 4 abut against each other is a non-magnetic body, and thus a negative effect of the part on the magnetic field of the metal detection unit 3 can be prevented.

In the foreign-matter inspection device 1, the insulating bodies 59A and 59B are disposed on the respective inner surfaces of the upper edge wall 56 and the side edge walls 55 of the lower door 41 to extend along the upper edge wall 56 and the side edge walls 55. In other words, the insulating bodies 59A and 59B are disposed in the outer edge portions of the lower door 41 to extend along the outer edge portions. As a result, a current flowing due to the rattling of the lower door 41 can be effectively suppressed by being blocked in the entire outer edge portion where the lower door 41 abuts against the housing 4.

In the foreign-matter inspection device 1, the lower door 41 has the plate members P formed of a metal and the plate members P are disposed to extend along the insulating bodies 59A and 59B. The plate members P sandwich the insulating bodies 59A and 59B in cooperation with the lower door 41. As a result, external X-ray leakage can be further suppressed by the plate members P. In addition, the insulating bodies 59A and 59B can be firmly fixed to the lower door 41 by the plate members P being used.

Although one embodiment of the present disclosure has been described above, one form and another form of the present disclosure are not limited to the embodiment described above.

Although the insulating bodies 59A and 59B are formed of resin in the embodiment described above, the insulating bodies 59A and 59B may also be formed as non-resinous insulating bodies. Although the insulating bodies 59A and 59B extend along the outer edge portions of the lower door 41 in the outer edge portions, the arrangement of the insulating bodies 59A and 59B is not particularly limited and the lower door 41 may abut against the housing 4 via the insulating bodies 59A and 59B. Although the plate members P are disposed to sandwich the insulating bodies 59A and 59B in the embodiment described above, the plate members P are optional depending on, for example, specifications.

Although the lower door 41 is an open door structure in the embodiment described above, various other door structures (door mechanisms) may also be adopted for the lower door 41. For example, the door structure of the lower door 41 may also be a sliding door structure in which a door is opened and closed by sliding or a structure in which an open door structure and a sliding door structure are combined with each other. In a case where the lower door 41 is an open door structure, a negative effect of a current attributable to rattling or the like poses a concern in many cases, and thus the effect of suppressing the flow of the current with the insulating bodies 59Aand 59B is effective.

Although an example in which the object S is transported from the opening portion 4a to the opening portion 4b has been described in the above embodiment, the transport direction may be reversed. In this case, the laser sensor 24 may be disposed between the opening portion 4b and the second hood portion 34 and the laser sensor 38 may be disposed in the second hood portion 34 with a slit formed in a side surface of the second hood portion 34. Although an example in which a part of the conveyor 10 is disposed in the housing 4 has been described in the above embodiment, the conveyor 10 as a whole may also be accommodated in the housing 4.

### Reference Signs List

1: Foreign-matter inspection device, 2: X-ray inspection unit, 3: Metal detection unit, 4: Housing, 10: Conveyor (transporting unit), 41: Lower door (door part), 59A, 59B: Insulating body, P: Plate member, S: Object to be inspected.

## Claims

1. A foreign-matter inspection device comprising:
a transporting unit configured to transport an object to be inspected;
an X-ray inspection unit configured to detect, by using permeability of X-rays, a foreign matter included in the object being transported by the transporting unit;
a metal detection unit configured to detect, by using an interaction between a magnetic field and a metal, a foreign matter included in the object being transported by the transporting unit; and
a housing accommodating the X-ray inspection unit, the metal detection unit, and at least a part of the transporting unit therein and configured to keep the X-rays of the X-ray inspection unit from leaking outside;
wherein
the housing is provided with a door part configured to open and close the housing; and
the door part is configured to abut against the housing via an insulating body in a closed state.

2. The foreign-matter inspection device according to claim 1, wherein
the insulating body is formed of resin.

3. The foreign-matter inspection device according to claim 1 or 2, wherein
the insulating body is disposed in an outer edge portion of the door part to extend along the outer edge portion.

4. The foreign-matter inspection device according to claim 3, wherein
the door part has a plate member formed of a metal; and
the plate member is disposed to extend along the insulating body and sandwiches the insulating body in cooperation with the door part.
